# FASCICULE DE BREVET EUROPEEN

(11) **EP 3 158 653 B1**
(45) Date de publication et mention de la délivrance du brevet: **12.08.2020**
(21) Numéro de dépôt: 15731872.6
(22) Date de dépôt: 16.06.2015
(51) Int. Cl.: H04B 1/3827

(54) **DISPOSITIF MODULABLE DE POSITIONNEMENT DE DEUX COMPOSANTS L'UN PAR RAPPORT À L'AUTRE**
MODULARE VORRICHTUNG ZUM POSITIONIEREN ZWEIER BAUTEILE ZUEINANDER
MODULAR DEVICE FOR POSITIONING TWO COMPONENTS WITH RESPECT TO ONE ANOTHER

(30) Priorité: 18.06.2014 FR 1455598
(43) Date de publication de la demande: 26.04.2017
(73) Titulaire: Fazup, 2800 Delemont (CH)
(72) Inventeur: SAMAKH, Antoine, 2800 Delemont (CH); SAMAKH, Mathieu, 92100 Boulogne Billancourt (FR)
(74) Mandataire: Brevalex
(86) Numéro de dépôt international: PCT/EP2015/063433
(87) Numéro de publication internationale: WO 2015/193286

(56) Documents cités:
- EP-A1- 0 117 127
- WO-A1-2013/165419
- FR-A1- 2 937 826
- US-A1- 2014 009 900
- US-B1- 6 359 216

## Description

### DOMAINE TECHNIQUE

L'invention concerne un dispositif de positionnement de deux composants l'un par rapport à l'autre, qui est apte à s'adapter aux dimensions de l'un des deux composants.

L'invention concerne plus particulièrement un dispositif de positionnement d'un appareil par rapport à un composant adhésif, plus particulièrement un patch dit "anti-ondes", qui est apte à s'adapter aux dimensions de l'appareil, afin de permettre un bon positionnement du composant adhésif sur l'appareil.

### ÉTAT DE LA TECHNIQUE ANTÉRIEURE

Certains appareils électroniques tels que par exemple les téléphones portables, les tablettes numériques ou les ordinateurs portables émettent des ondes électromagnétiques. Ces ondes sont potentiellement nocives pour la santé de la personne utilisant un tel appareil, d'autant plus que l'appareil est utilisé près du corps, comme c'est souvent le cas pour un téléphone portable.

Afin de limiter la nocivité de ces ondes, il existe des dispositifs se présentant sous la forme d'adhésifs, ou "patchs", que l'on appose sur l'appareil électronique, et qui réduisent la quantité d'énergie véhiculée par les radiofréquences émises vers l'usager par l'appareil.

Un tel patch doit être positionné avec précision sur l'appareil, afin qu'il réduise efficacement la puissance absorbée des ondes, sans nuire au bon fonctionnement de l'appareil.

Pour cela, il est connu de commercialiser le patch avec une ou plusieurs coques de montage.

Chaque coque de montage comporte un logement complémentaire à la forme du patch, dans lequel le patch est reçu, et elle délimite en outre un espace de forme et dimensions complémentaires à l'appareil ou d'une partie de l'appareil sur laquelle le patch doit être monté.

Cette double complémentarité de la coque avec le patch d'une part et de la coque avec l'appareil d'autre part permet d'assurer le bon positionnement du patch par rapport à l'appareil.

Une coque actuelle est réalisée par exemple par moulage de matière plastique.

Le patch est destiné à être monté sur une pluralité d'appareils qui peuvent être de dimensions très variées. Ainsi, il a été proposé de former une pluralité de coques dont chacune est adaptée à un ou plusieurs appareils.

Cependant, étant donnée la quantité d'appareils sur lesquels un tel patch est destiné à être monté, le nombre de coques qu'il est alors nécessaire de fabriquer est lui aussi important.

Dans le cas où le patch est vendu dans un ensemble constitué d'un patch et d'une pluralité de coques, afin de s'adapter aux dimensions d'une majorité d'appareils, la pluralité des coques fournies rend l'emballage volumineux et la quantité de déchets produits est importante. Aussi, il est possible que l'ensemble ne comporte pas de coque adaptée à l'appareil sur lequel l'utilisateur désire monter le patch.

L'invention a pour but de proposer un dispositif de positionnement du patch par rapport à l'appareil permettant de résoudre les problèmes exposés ci-dessus.

Le document EP0117127 décrit un dispositif de placement d'un premier élément par rapport à un deuxième élément, le dispositif comportant un panneau horizontal comportant un logement apte à recevoir le deuxième élément, et des moyens de butée pour fixer le deuxième élément ainsi que des moyens de réglage. Les moyens de réglage comportant une série d'orifices aptes à recevoir aux moins un pied desdits moyens de butée.

### EXPOSÉ DE L'INVENTION

La présente invention est définie par les caractéristiques de la revendication 1.

L'invention propose un dispositif de positionnement d'un premier élément par rapport à un deuxième élément qui comporte :
- un panneau horizontal dont la face supérieure duquel est apte à recevoir le premier élément et comportant un logement apte à recevoir le deuxième élément ; et
- des premiers moyens de butée contre lesquels le premier élément est apte à venir en butée selon une première direction de réglage et des deuxièmes moyens de butée contre lesquels le premier élément est apte à venir en butée selon une deuxième direction de réglage perpendiculaire à la première direction de réglage, lesdits premiers et deuxièmes moyens de butée étant montés sur le panneau en faisant saillie par rapport à la face supérieure du panneau, qui comporte des moyens de réglage de la position des premiers moyens de butée selon la première direction de réglage et des moyens de réglage de la position des deuxièmes moyens de butée selon la deuxième direction de réglage par rapport à la position du logement dans le panneau.

Le réglage des positions des moyens de butée par rapport au logement permet aux moyens de butée de délimiter un logement qui reçoit le premier élément, tel que par exemple un appareil électronique, qui est positionné par rapport au logement du deuxième élément, tel que par exemple un patch. Ce positionnement peut alors être réalisé en fonction des spécifications dimensionnelles et structurelles de l'appareil.

Il est ainsi possible de fabriquer un dispositif de positionnement unique qui est adapté à la pluralité d'appareils sur lesquels le patch peut être monté.

De préférence, les moyens de réglage de la position des premiers ou des deuxièmes moyens de butée comportent au moins une série d'orifices formés dans le panneau qui sont répartis sur le panneau le long de la direction de réglage associée, et lesdits moyens de butée comportent au moins un pied apte à être reçu dans un orifice de ladite série d'orifices, qui est défini en fonction du réglage de la position desdits moyens de butée par rapport à la position du logement.

Les orifices de chaque série d'orifices sont répartis en plusieurs alignements parallèles à ladite direction de réglage, les alignements étant décalés les uns des autres parallèlement à la dite direction de réglage selon un pas prédéfini, et les orifices de chaque alignement sont distants d'un multiple dudit pas.

De préférence, les moyens de butée associés à au moins une direction de réglage comportent deux pieds aptes à être reçus dans deux orifices, chacun de ces deux orifices appartenant à l'une de deux séries d'orifices qui sont identiques et décalées perpendiculairement à la direction de réglage associée.

De préférence, lesdits moyens de butée consistent en une nervure plane perpendiculaire au plan du panneau et perpendiculaire à la direction de réglage des moyens de butée, la nervure comportant au moins un pied apte à être reçu dans un orifice d'une série d'orifices associée.

De préférence, chaque nervure comporte une portion supérieure, au moins un pied en saillie vers le bas par rapport à la portion supérieure et un épaulement formé au niveau dudit au moins un pied, comportant un bord inférieur situé à une position verticale intermédiaire entre le bord inférieur de la partie horizontale de la nervure et le bord d'extrémité inférieure libre du pied.

De préférence, chaque orifice consiste en une encoche formée dans le panneau, qui est orientée perpendiculairement la direction de réglage associée.

De préférence, les moyens de réglage de la position des moyens de butée comportent des moyens de guidage en coulissement desdits moyens de butée le long de ladite direction de réglage et comportent une portion crantée formée sur la face supérieure du panneau, qui est parallèle à la direction de réglage associée, avec laquelle un doigt solidaire des moyens de butée est apte à coopérer.

De préférence, le logement comporte des moyens de réglage de l'orientation du deuxième composant par rapport au panneau lorsque le deuxième composant est reçu dans le logement.

De préférence, les moyens de réglage de l'orientation comportent au moins une encoche formée à la périphérie du logement dans laquelle un ergot complémentaire du deuxième composant est apte à être reçu.

De préférence, le panneau et/ou les moyens de butée sont réalisés dans un matériau choisi parmi la mousse, le carton, une matière plastique, le bois, le liège, le polystyrène ou le caoutchouc, ou un métal.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une vue en plan d'un dispositif de positionnement selon l'invention ;
- la figure 2 est un détail d'une nervure du dispositif de positionnement représenté à la figure 1 ;
- la figure 3 est une représentation schématique d'une variante de réalisation de la nervure représentée à la figure 2.

### EXPOSÉ DÉTAILLÉ DE MODES DE RÉALISATION PARTICULIERS

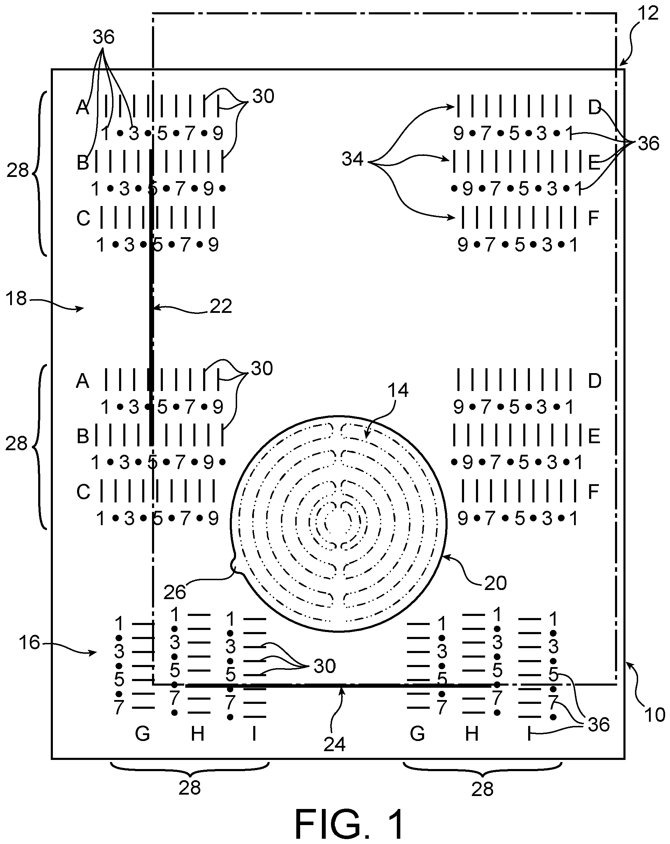

On a représenté à la figure 1 un dispositif de positionnement 10 destiné à réaliser le positionnement d'un premier élément 12 par rapport à un deuxième élément 14.

Le premier élément 12 est par exemple un appareil électronique tel qu'un téléphone portable. Le deuxième élément 14 est par exemple un patch dit "anti-ondes", qui réduit la quantité d'énergie véhiculée par les radiofréquences émises vers l'usager par l'appareil électronique 12.

Le dispositif de positionnement a pour but final de faciliter la pose du patch 14 sur l'appareil électronique 12, à un endroit particulier de l'appareil électronique 12.

Le positionnement des deux éléments 12, 14 l'un par rapport à l'autre est important car il influe fortement sur l'efficacité de la réduction de l'énergie qui est absorbée par l'utilisateur de l'appareil électronique 12, notamment à cause de la position du patch 14 par rapport aux antennes internes de l'appareil électronique.

Le dispositif de positionnement 10 comporte un panneau 16 sur lequel les deux éléments 12, 14 sont positionnés, des moyens de positionnement 18 de l'appareil électronique 12 par rapport au panneau 16 et des moyens de positionnement 20 du patch 14 par rapport au panneau 16.

Les moyens de positionnement 18 de l'appareil électronique 12 par rapport au panneau 16 sont des moyens de butée contre lesquels l'appareil électronique 12 est apte à venir en butée selon deux directions perpendiculaires.

Ils comportent ainsi des premiers moyens de butée 22 contre lesquels l'appareil électronique 12 est apte à venir en butée selon une première direction, que l'on appellera par la suite première direction de réglage, qui est ici la direction transversale de la figure 1, et des deuxièmes moyens de butée 24 contre lesquels l'appareil électronique 12 est apte à venir en butée selon une deuxième direction perpendiculaire à la première direction, que l'on appellera par la suite deuxième direction de réglage, qui est ici la direction longitudinale de la figure 1.

Ces moyens de butée 22, 24 font saillie par rapport à la face supérieure horizontale du panneau 16.

Selon le mode de réalisation représenté aux figures, chacun des moyens de butée 22, 24 comporte une nervure s'étendant dans un plan qui est perpendiculaire au plan du panneau 16 et à la direction de réglage associée aux moyens de butée. C'est-à-dire que la nervure 22 des premiers moyens de butée s'étend dans un plan longitudinal vertical et la nervure 24 des deuxièmes moyens de butée s'étend dans un plan transversal vertical.

Selon une variante de réalisation non représentée, chacun des moyens de butée 22, 24 comporte au moins un plot ou potelet vertical qui fait saillie par rapport à la face supérieure du panneau 16. Au moins un des premiers ou des deuxièmes moyens de butée 22, 24 comporte au moins deux plots alignés selon une direction perpendiculaire à la direction de réglage qui leur est associée.

Ainsi, les premiers moyens de butée 22 et les deuxièmes moyens de butée 24 délimitent avec la face supérieure du panneau 16, un coin dans lequel un coin de l'appareil électronique 12 qui est prédéfini est disposé, ce qui permet de positionner l'appareil électronique 12 par rapport au panneau 16.

Les moyens 20 de positionnement du patch 14 consistent en un logement creux formé dans la face supérieure du panneau 16. La forme et les dimensions du logement creux 20 sont identiques à la forme et aux dimensions du patch 14. Ainsi, le patch 14 est correctement positionné sur le panneau 16 aussi bien horizontalement, qu'en orientation autour d'un axe vertical.

Ici, le patch 14 est en forme d'un disque. Le logement creux 20 a par conséquent lui aussi la forme d'un disque de même diamètre.

Le fond du logement creux 20, contre lequel le patch 14 repose lorsqu'il est reçu dans le logement creux 20, consiste en une paroi souple, qui est apte à être déformée par une pression de la part de l'utilisateur.

Par exemple, le fond du logement creux est réalisé par thermoformage ou par compression d'un matériau souple tel qu'une matière plastique.

Le logement creux 20 comporte en outre une encoche 26 formée dans son bord périphérique, qui est destinée à recevoir une languette complémentaire du patch 14. Cette encoche 26 et la languette complémentaire permettent de définir une orientation du patch 14 par rapport au panneau 16, autour d'un axe vertical central du logement creux 20.

Le dispositif de positionnement 10 est réalisé pour pouvoir recevoir plusieurs appareils électroniques 12 différents, dont les dimensions et la configuration sont variables entre deux appareils électroniques différents.

Cela a pour conséquence que l'emplacement de l'appareil électronique 12 sur lequel le patch 14 doit être placé peut ne pas être le même pour ces différents appareils électroniques.

A cet effet, le dispositif de positionnement 10 comporte des moyens de réglage des moyens de butée 22, 24, permettant de modifier la position de ces moyens de butée 22, 24 sur le panneau 16, par rapport à la position du logement creux 20.

Ainsi, le dispositif de positionnement 10 comporte des moyens pour le réglage de la position transversale des premiers moyens de butée 22 sur le panneau 16 et des moyens pour le réglage de la position longitudinale des deuxièmes moyens de butée 24 sur le panneau 16.

Selon un mode de réalisation préféré de l'invention représenté aux figures, les moyens de réglage de la position des moyens de butée 22, 24 comportent, pour chacun des moyens de butée 22, 24, au moins une série 28 d'orifices 30 qui sont répartis selon la direction de réglage associée des moyens de butée 22, 24 et les moyens de butée 22, 24 comportent un pied 32 associé à chaque série d'orifices 30, qui est apte à être reçu dans un orifice 30 en fonction du réglage de la position des moyens de butée 22, 24.

Le réglage de la position des moyens de butée 22, 24 a pour conséquence de régler la position du coin destiné à recevoir un coin de l'appareil électronique 12 par rapport au panneau 16 et par rapport à la position du patch 14.

Ici, chaque orifice 30 consiste en une fente formée dans le panneau 16 qui a une orientation perpendiculaire à la direction de réglage associée.

Il sera compris que les orifices 30 peuvent avoir une autre forme, par exemple ils consistent en des trous circulaires.

Ici, la nervure 22 des premiers moyens de butée comporte deux pieds 32 disposés à chaque extrémité de celle-ci.

Ainsi, les moyens de réglage des premiers moyens de butée 22 comportent deux séries 28 d'orifices 30 qui sont décalées longitudinalement l'une par rapport à l'autre.

Chaque pied de la nervure 22 est associé à une série 28 d'orifices 30 et est apte à être reçu dans un orifice 30 prédéfini. Les deux pieds 32 sont aptes à être reçus dans deux orifices 30 qui sont situés à la même position transversale sur le panneau 16.

Le décalage longitudinal d'une série 28 d'orifices 30 par rapport à l'autre est sensiblement égal à la distance entre les deux pieds 32 de la nervure 22.

De même, la nervure 24 des deuxièmes moyens de butée comporte deux pieds 32 disposés à chaque extrémité de celle-ci. Ainsi, les moyens de réglage des deuxièmes moyens de butée 24 comportent deux séries 28 d'orifices 30 qui sont décalées transversalement l'une par rapport à l'autre.

Chaque pied de la nervure 24 est associé à une série 28 d'orifices 30 et est apte à être reçu dans un orifice 30 prédéfini. Les deux pieds 32 sont aptes à être reçus dans deux orifices 30 qui sont situés à la même position longitudinale sur le panneau 16.

Le décalage transversal d'une série 28 d'orifices 30 par rapport à l'autre est sensiblement égal à la distance entre les deux pieds 32 de la nervure 24.

Les orifices 30 de chaque série 28 sont répartis le long de la direction de réglage selon un pas prédéterminé définissant la précision du réglage offert par le dispositif 10. A titre d'exemple non limitatif, le pas de réglage est de un millimètre.

Selon un premier mode de réalisation non représenté, tous les orifices 30 d'une série 28 forment un alignement unique d'orifices 30 espacés selon le pas de réglage.

La dimension des orifices 30 peut parfois être trop grande pour permettre un écart entre deux orifices 30 égal au pas de réglage, ce qui risquerait de fragiliser le panneau 16 et un utilisateur pourrait rompre le panneau 16 avant d'avoir pu monter le patch 14 sur l'appareil électronique 12.

C'est pourquoi, selon un autre mode de réalisation représenté aux figures, chaque série 28 d'orifices 30 comporte une pluralité d'alignements 34 d'orifices 30, ici trois alignements 34 par série 28.

Les alignements 34 de chaque série 28 sont parallèles et sont décalés les uns par rapport aux autres selon la direction perpendiculaire à la direction de réglage, c'est-à-dire que les alignements 34 associés aux premiers moyens de réglage 22 sont décalés longitudinalement et les alignements 34 associés aux deuxièmes moyens de réglage 24 sont décalés transversalement.

Aussi, les alignements 34 de chaque série 28 sont décalés les uns par rapport aux autres selon la direction de réglage et la distance entre deux orifices 30 de chaque alignement 34 est supérieure au pas de réglage.

A titre d'exemple non limitatif, la valeur du décalage entre deux alignements 34, le long de la direction de réglage est égale au pas de réglage et la distance entre deux orifices 30 de chaque alignement 34 est égale à un multiple du pas de réglage. Ce multiple est de préférence égal au nombre d'alignements 34 de la série 28, c'est-à-dire ici que la distance entre deux orifices est ici de trois fois le pas de réglage.

Pour faciliter l'utilisation du dispositif de positionnement 10, notamment pour positionner correctement chaque nervure 22, 24 sur le panneau 16, des inscriptions 36 sont présentes sur la face supérieure du panneau 16 permettant d'identifier les orifices 30.

Par exemple, ici, chaque série 28 d'orifices 30 est associée à des lettres identifiant les alignements 34 et des chiffres ou points identifiant la position de chaque orifice dans un alignement.

Deux orifices 30 destinés à recevoir simultanément les deux pieds 32 d'une nervure 22, 24 sont associés à des inscriptions identiques.

Ainsi, en se reportant à une notice associée au dispositif de positionnement 10, un utilisateur peut, à partir de la référence de son appareil électronique, identifier quels sont les orifices 30 qui recevront les pieds 32 des nervures 22, 24.

De préférence, les inscriptions 36 pour les premiers moyens de positionnement 22 sont différentes des inscriptions 36 pour les deuxièmes moyens de positionnement 24, afin d'éviter toute interversion de l'identification des orifices 30.

A partir de cela, l'utilisateur positionne les nervures 22, 24 sur le panneau 16, il met ensuite le patch 14 en place dans le logement creux 20 puis l'appareil électronique 12 sur le panneau 16, en butée contre les deux nervures 22, 24.

Le patch 14 est ainsi correctement positionné par rapport à l'appareil électronique 12. L'utilisateur peut alors exercer une pression sur le fond du logement 20, pour provoquer la déformation de celui-ci, afin d'apposer le patch 14 sur l'appareil électronique 12.

Chaque nervure 22, 24 comporte une portion supérieure 38 verticale d'orientation principale perpendiculaire à la direction de réglage associée, contre laquelle l'appareil électronique 12 est apte à venir en butée et deux pieds 32 qui s'étendent dans le même plan que la portion supérieure 38 et qui font saillie verticalement vers le bas par rapport au bord inférieur 40 de la portion supérieur 38.

Selon la position des orifices 30 dans lesquels les pieds 32 des nervures 22, 24 sont placés, il se peut qu'une nervure 22, 24 chevauche en partie le logement creux 20. Il y a alors un risque que cette nervure 22, 24 gêne ou empêche d'apposer correctement le patch 14 sur l'appareil électronique 12.

En effet, le bord inférieur 40 de la portion supérieure 38 de la nervure vient en appui contre la face supérieure du panneau 16 et donc affleure avec l'embouchure supérieure du logement 20.

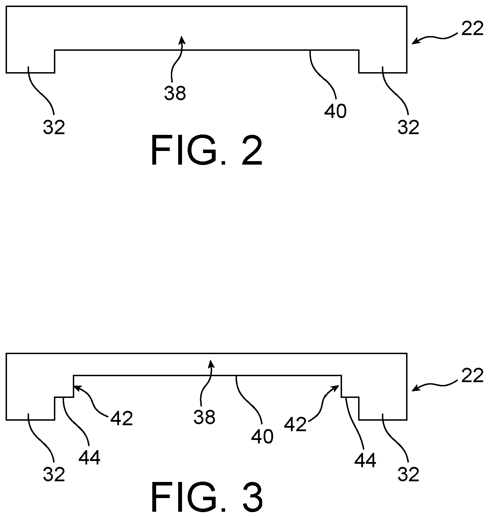

Pour limiter cette gêne, et ainsi permettre d'apposer le patch 14 sur l'appareil électronique 12, selon une variante de réalisation représentée à la figure 3, les nervures 22, 24 sont conformées pour que le bord inférieur 40 de la partie horizontale 38 de chaque nervure 22, 24 puisse être maintenu à distance de la face supérieure du panneau 16 lorsque les nervures 22, 24 sont montées sur le panneau 16.

Pour cela, chaque nervure 22, 24 comporte un épaulement 42 qui est formé au niveau de chaque pied 32. Chaque épaulement 42 comporte un bord inférieur d'appui 44 qui est situé à une position verticale intermédiaire entre le bord inférieur 40 de la partie horizontale de la nervure 22, 24 et le bord d'extrémité inférieure libre du pied 32.

Lorsque la nervure 22, 24 est montée sur le panneau 16, le bord inférieur 44 de l'épaulement 42 est en appui contre la face supérieure du panneau 16 à la place du bord inférieur 40 de la portion supérieure 38 de la nervure 22, 24.

Le bord inférieur 40 de la portion supérieure 38 de la nervure 22, 24 est alors situé verticalement à distance de la face supérieure du panneau 16, ce qui permet d'éviter que la nervure 22, 24 ne gêne l'action d'apposer le patch 14 sur l'appareil électronique 12.

Le mode de réalisation des moyens de réglage des moyens de butée 22, 24 qui vient d'être décrit, consiste en une association d'orifices 30 avec des pieds 32 des nervures 22, 24.

Selon un autre mode de réalisation (non représenté), les moyens de réglage des moyens de butée 22, 24 consistent en des moyens de guidage en coulissement de chaque nervure 22, 24 selon la direction de réglage associée et des moyens de blocage de chaque nervure 22, 24 en position de réglage.

Par exemple, les moyens de blocage consistent en une portion crantée fixée au panneau qui reçoit un doigt solidaire de la nervure 22, 24.

Selon la configuration de l'appareil électronique 12, il est possible que son positionnement sur le panneau 16 consiste à lui donner une certaine orientation par rapport au panneau, c'est-à-dire qu'il peut être prescrit de faire pivoter l'appareil électronique 12 d'un angle de 90, 180 ou 270 degrés, c'est-à-dire de positionner l'un des quatre coins de l'appareil électronique 12 dans le coin défini par le dispositif de positionnement 10.

Cette correction de l'orientation de l'appareil électronique 12 implique qu'il faut aussi corriger l'orientation du patch 14 par rapport au panneau 16 pour obtenir l'orientation correcte du patch 14 par rapport à l'appareil électronique 12.

A cet effet, et selon une variante de réalisation non représentée, le logement creux 20 comporte plusieurs encoches 26 dont une seule peut recevoir la languette du patch 14. Cela permet de définir plusieurs orientations possibles du patch 14 par rapport au panneau 16.

Par exemple, le logement creux 20 comporte quatre encoches 26 réparties à 90 degrés autour de l'axe principal du logement 20.

Les composants 16, 22, 24 du dispositif de positionnement 10 peuvent être réalisés dans tout matériau permettant sa fabrication et son utilisation, sans impliquer de coûts trop élevés ni de risque de casse avant que le patch 14 soit mis en place sur l'appareil électronique 12.

A titre d'exemple non limitatif pour le matériau des composants 16, 22, 24, on cite la mousse, le carton, une matière plastique, le bois, le liège, le polystyrène ou le caoutchouc, ou un métal.

Selon un autre exemple, le panneau est réalisé en deux matériaux, un premier matériau souple pour former le logement 20, et plus principalement le fond du logement 20, et un deuxième matériau plus rigide, formant le reste du panneau 16. Ce deuxième matériau peut consister en un autre matériau plastique plus rigide qui est surmoulé autour du premier matériau souple.

Selon le mode de réalisation du dispositif de positionnement 10 représenté aux figures, celui-ci se présente sous la forme de trois éléments plans de faible épaisseur. Ainsi, avant son utilisation, c'est-à-dire avant l'assemblage des nervures 22, 24 sur le panneau 16, le dispositif de positionnement forme un ensemble plan faiblement encombrant qui peut être vendu en l'état avec un patch 14 et une notice explicative (par exemple imprimée au dos du panneau 16).

Les moyens d'emballage de tous ces composants sont alors relativement réduits et aussi peu encombrants.

Cela présente un avantage par rapport à l'état de la technique selon lequel la pluralité de coques accompagnant un seul patch 14 augmente le volume et le coût du produit conditionné.

L'invention concerne aussi l'ensemble formé par le patch 14 et le dispositif de positionnement 10 avec, le cas échéant, les nervures 22, 24 non montées sur le panneau 16, c'est-à-dire que leurs pieds 32 ne sont pas introduits dans les orifices 30.

Il sera compris que le dispositif de positionnement 10 selon l'invention n'est pas limité à un patch 14 et un appareil électronique 12, mais s'applique au positionnement relatif de deux éléments l'un par rapport à l'autre, dont l'un des deux composants est apte à être reçu dans le logement 20 et l'autre est apte à venir en butée contre les moyens de butée 22, 24.

## Revendications

1. Dispositif de positionnement (10) d'un premier élément (12) par rapport à un deuxième élément (14) qui comporte :
- un panneau horizontal (16) dont la face supérieure duquel est apte à recevoir le premier élément (12) et comportant un logement (20) apte à recevoir le deuxième élément (14); et
- des premiers moyens de butée (22) contre lesquels le premier élément (12) est apte à venir en butée selon une première direction de réglage et des deuxièmes moyens de butée (24) contre lesquels le premier élément (12) est apte à venir en butée selon une deuxième direction de réglage perpendiculaire à la première direction de réglage, lesdits premiers et deuxièmes moyens de butée (22, 24) étant montés sur la face supérieure du panneau (16) en faisant saillie par rapport à la face supérieure du panneau (16),
qui comporte des moyens de réglage de la position des premiers moyens de butée (22) selon la première direction de réglage et des moyens de réglage de la position des deuxièmes moyens de butée (24) selon la deuxième direction de réglage par rapport à la position du logement (20) dans le panneau (16),
dans lequel les moyens de réglage de la position des premiers ou des deuxièmes moyens de butée (22, 24) comportent au moins une série (28) d'orifices (30) formés dans le panneau (16) qui sont répartis sur le panneau (16) le long de la direction de réglage associée,
dans lequel lesdits moyens de butée (22, 24) comportent au moins un pied (32) apte à être reçu dans un orifice (30) de ladite série (28) d'orifices (30), qui est défini en fonction du réglage de la position desdits moyens de butée (22, 24) par rapport à la position du logement (20), et dans lequel les orifices (30) de chaque série (28) d'orifices (30) sont répartis en plusieurs alignements (34) parallèles à ladite direction de réglage, les alignements (34) étant décalés les uns des autres parallèlement à la dite direction de réglage selon un pas prédéfini,
et dans lequel les orifices (30) de chaque alignement (34) sont distants d'un multiple dudit pas,
**caractérisé en ce que** ledit multiple est égal au nombre d'alignements de chaque série (28) d'orifices (30).

2. Dispositif de positionnement (10) selon la revendication 1, **caractérisé en ce que** les moyens de butée (22, 24) associés à au moins une direction de réglage comportent deux pieds (32) aptes à être reçus dans deux orifices (30), chacun de ces deux orifices (30) appartenant à l'une de deux séries (28) d'orifices (30) qui sont Identiques et décalées perpendiculairement à la direction de réglage associée.

3. Dispositif de positionnement (10) selon l'une quelconque des revendications 1 ou 2, **caractérisé en ce que** lesdits moyens de butée (22, 24) consistent en une nervure plane perpendiculaire au plan du panneau (16) et perpendiculaire à la direction de réglage des moyens de butée (22, 24), la nervure (22, 24) comportant au moins un pied (32) apte à être reçu dans un orifice (30) d'une série (28) d'orifices (30) associée.

4. Dispositif de positionnement (10) selon la revendication précédente, **caractérisé en ce que** chaque nervure (22, 24) comporte une portion supérieure (38), au moins un pied (32) en saillie vers le bas par rapport à la portion supérieure (38) et un épaulement (42) formé au niveau dudit au moins un pied (32), comportant un bord inférieur (44) situé à une position verticale intermédiaire entre le bord inférieur (40) de la partie horizontale de la nervure (22, 24) et le bord d'extrémité Inférieure libre du pied (32).

5. Dispositif de positionnement (10) selon la revendication 1, **caractérisé en ce que** les moyens de réglage de la position des moyens de butée comportent des moyens de guidage en coulissement desdits moyens de butée le long de ladite direction de réglage et comportent une portion crantée formée sur la face supérieure du panneau (16), qui est parallèle à la direction de réglage associée, avec laquelle un doigt solidaire des moyens de butée est apte à coopérer.

6. Dispositif de positionnement (10) selon l'une quelconque des revendications précédentes, **caractérisé en ce que** le logement (20) comporte des moyens (26) de réglage de l'orientation du deuxième composant (14) par rapport au panneau (16) lorsque le deuxième composant (14) est reçu dans le logement (20).

7. Dispositif de positionnement (10) selon la revendication précédente, **caractérisé en ce que** les moyens de réglage de l'orientation comportent au moins une encoche (26) formée à la périphérie du logement (20) dans laquelle un ergot complémentaire du deuxième composant (14) est apte à être reçu.

8. Dispositif de positionnement (10) selon l'une quelconque des revendications précédentes, **caractérisé en ce que** le panneau (16) et/ou les moyens de butée (22, 24) sont réalisés dans un matériau choisi parmi la mousse, le carton, une matière plastique, le bois, le liège, le polystyrène ou le caoutchouc, ou un métal.

## Patentansprüche

1. Vorrichtung zur Positionierung (10) eines ersten Elements (12) bezogen auf ein zweites Element (14), die Folgendes aufweist:
- eine horizontale Platte (16), von welcher deren Oberseite geeignet ist, ein erstes Element (12) aufzunehmen und aufweisend eine Aufnahme (20), die geeignet ist, das zweite Element (14) aufzunehmen; und
- erste Anschlagmittel (22), gegen welche das erste Element (12) gemäß einer ersten Einstellungsrichtung in Anschlag kommen kann, und zweite Anschlagmittel (24), gegen welche das erste Element (12) gemäß einer zweiten Einstellungsrichtung, die senkrecht zu der ersten Einstellungsrichtung verläuft, in Anschlag kommen kann, wobei die ersten und zweiten Anschlagmittel (22, 24) auf der Oberseite der Platte (16) befestigt sind, wobei sie bezogen auf die Oberseite der Platte (16) abstehen,
die Mittel zum Einstellen der Position der ersten Anschlagmittel (22) gemäß der ersten Einstellungsrichtung und
Mittel zum Einstellen der Position der zweiten Anschlagmittel (24) gemäß der zweiten Einstellungsrichtung bezogen auf die Position der Aufnahme (20) in der Platte (16) aufweist, wobei die Mittel zum Einstellen der Position der ersten oder zweiten Anschlagmittel (22, 24) wenigstens eine Reihe (28) von Öffnungen (30) aufweisen, die in der Platte (16) ausgebildet sind, die entlang der zugehörigen Einstellungsrichtung auf der Platte (16) verteilt sind, wobei die Anschlagmittel (22, 24) wenigstens einen Fuß (32) aufweisen, der geeignet ist, in einer Öffnung (30) der Reihe (28) von Öffnungen (30) aufgenommen zu sein, der in Abhängigkeit von der Einstellung der Position der Anschlagmittel (22, 24) bezogen auf die Position der Aufnahme (20) definiert ist, und wobei die Öffnungen (30) jeder Reihe (28) von Öffnungen (30) in mehreren Aneinanderreihungen (34) verteilt sind, die parallel zu der Einstellungsrichtung verlaufen, wobei die Aneinanderreihungen (34) um einen vorgegebenen Abstand parallel zu der Einstellungsrichtung voneinander versetzt sind,
und wobei die Öffnungen (30) jeder Aneinanderreihung (34) um ein Vielfaches des Abstands entfernt sind,
**dadurch gekennzeichnet, dass** das Vielfache gleich der Anzahl von Aneinanderreihungen jeder Reihe (28) von Öffnungen (30) ist.

2. Positionierungsvorrichtung (10) nach Anspruch 1, **dadurch gekennzeichnet, dass** die Anschlagmittel (22, 24), die wenigstens einer Einstellungsrichtung zugeordnet sind, zwei Füße (32) aufweisen, die geeignet sind, in zwei Öffnungen (30) aufgenommen zu sein, wobei jede dieser zwei Öffnungen (30) zu einer von zwei Reihen (28) von Öffnungen (30) gehört, die identisch und senkrecht zu der zugehörigen Einstellungsrichtung versetzt sind.

3. Positionierungsvorrichtung (10) nach einem der Ansprüche 1 oder 2, **dadurch gekennzeichnet, dass** die Anschlagmittel (22, 24) aus einer ebenen Rippe bestehen, die senkrecht zu der Ebene der Platte (16) und senkrecht zu der Einstellungsrichtung der Anschlagmittel (22, 24) verläuft,
wobei die Rippe (22, 24) mindestens einen Fuß (32) aufweist, der geeignet ist, in einer Öffnung (30) einer zugehörigen Reihe (28) von Öffnungen (30) aufgenommen zu sein.

4. Positionierungsvorrichtung (10) nach dem vorhergehenden Anspruch, **dadurch gekennzeichnet, dass** jede Rippe (22, 24) einen oberen Abschnitt (38), wenigstens einen Fuß (32), der nach unten bezogen auf den oberen Abschnitt (38) absteht, und einen Absatz (42), der an dem wenigstens einen Fuß (32) ausgebildet ist, aufweist, der eine Unterkante (44) aufweist, die sich in einer vertikalen Zwischenposition zwischen der Unterkante (40) des horizontalen Abschnitts der Rippe (22, 24) und dem freien unteren Außenrand des Fußes (32) befindet.

5. Positionierungsvorrichtung (10) nach Anspruch 1, **dadurch gekennzeichnet, dass** die Mittel zum Einstellen der Position der Anschlagmittel Mittel zur Gleitführung der Anschlagmittel entlang der Einstellungsrichtung aufweisen und einen gezahnten Abschnitt aufweisen, der auf der Oberseite der Platte (16) ausgebildet ist, der parallel zu der zugehörigen Einstellungsrichtung verläuft, mit dem ein Finger, der mit den Anschlagmitteln fest verbunden ist, zusammenzuwirken kann.

6. Positionierungsvorrichtung (10) nach einem der vorhergehenden Ansprüche, **dadurch gekennzeichnet, dass** die Aufnahme (20) Mittel (26) zur Einstellung der Ausrichtung der zweiten Komponente (14) bezogen auf die Platte (16), wenn die zweite Komponente (14) in der Aufnahme (20) aufgenommen ist, aufweist.

7. Positionierungsvorrichtung (10) nach dem vorhergehenden Anspruch, **dadurch gekennzeichnet, dass** die Mittel zur Einstellung der Ausrichtung mindestens eine Einkerbung (26) aufweisen, die am Rand der Aufnahme (20) ausgebildet ist, in der ein komplementärer Vorsprung der zweiten Komponente (14) aufgenommen sein kann.

8. Positionierungsvorrichtung (10) nach einem der vorhergehenden Ansprüche, **dadurch gekennzeichnet, dass** die Platte (16) und/oder die Anschlagmittel (22, 24) aus einem Material hergestellt sind, das aus Schaum, Karton, einem Kunststoff, Holz, Kork, Styropor oder Gummi oder einem Metall ausgewählt ist.

## Claims

1. Device for positioning (10) a first element (12) with respect to a second element (14) that comprises:
- a horizontal panel (16) of which the upper face of which is able to hold the first element (12) and which has a housing (20) able to hold the second element (14); and
- first abutment means (22) against which the first element (12) is able to come into abutment in a first adjusting direction and second abutment means (24) against which the first element (12) is able to come into abutment in a second adjusting direction perpendicular to the first adjusting direction, said first and second abutment means (22, 24) being mounted on the panel (16) projecting from the upper face of the panel (16),
that comprises means for adjusting the position of the first abutment means (22) in the first adjusting direction and means for adjusting the position of the second abutment means (24) in the second adjusting direction with respect to the position of the housing (20) in the panel (16),
werein the means for adjusting the position of the first or second abutment means (22, 24) comprise at least one series (28) of orifices (30) formed in the panel (16) which are distributed on the panel (16) along the associated adjusting direction,
wherein said abutment means (22, 24) comprise at least one foot (32) able to be held in an orifice (30) of said series (28) of orifices (30), which is defined according to the adjusting of the position of said abutment means (22, 24) with respect to the position of the housing (20),
and wherein the orifices (30) of each series (28) of orifices (30) are distributed in several alignments (34) parallel to said adjusting direction, with the alignments (34) being offset from one another parallel to said adjusting direction according to a predefined pitch,
and wherein the orifices (30) of each alignment (34) are separated by a multiple of said pitch,
**characterized in that** said pitch equals the number of alignments of each series (28) of orifices (30).

2. Device for positioning (10) according to claim 1, **characterised in that** the abutment means (22, 24) associated with at least one adjusting direction comprise two feet (32) able to be held in two orifices (30), with each one of these two orifices (30) belonging to one of the two series (28) of orifices (30) which are identical and offset perpendicularly to the associated adjusting direction.

3. Device for positioning (10) according to any of claims 1 or 2, **characterised in that** said abutment means (22, 24) consist of a planar rib perpendicular to the plane of the panel (16) and perpendicular to the adjusting direction of the abutment means (22, 24), with the rib (22, 24) comprising at least one foot (32) able to be held in an orifice (30) of a series (28) of associated orifices (30).

4. Device for positioning (10) as claimed in the preceding claim, **characterised in that** each rib (22, 24) comprises an upper portion (38), at least one foot (32) protruding downwards with respect to the upper portion (38) and a shoulder (42) formed on said at least one foot (32), comprising a lower edge (44) located at an intermediate vertical position between the lower edge (40) of the horizontal portion of the rib (22, 24) and the free lower end edge of the foot (32).

5. Device for positioning (10) according to claim 1, **characterised in that** the means for adjusting the position of the abutment means comprise means for guiding as sliding of said abutment means along said adjusting direction and comprise a serrated portion formed on the upper face of the panel (16), which is parallel to the associated adjusting direction, with which a finger integral with the abutment means is able to cooperate.

6. Device for positioning (10) as claimed in any of preceding claims, **characterised in that** the housing (20) comprises means (26) for adjusting the orientation of the second component (14) with respect to the panel (16) when the second component (14) is held in the housing (20).

7. Device for positioning (10) as claimed in the preceding claim, **characterised in that** the means for adjusting the orientation comprise at least one notch (26) formed at the periphery of the housing (20) wherein a lug complementary with the second component (14) is able to be held.

8. Device for positioning (10) according to any preceding claim, **characterised in that** the panel (16) and/or the abutment means (22, 24) are made from a material chosen from foam, cardboard, a plastic material, wood, cork, polystyrene or rubber, or a metal.
